# EUROPEAN PATENT SPECIFICATION

(11) **EP 3 096 966 B1**
(45) Date of publication and mention of the grant of the patent: **03.10.2018**
(21) Application number: 15701858.1
(22) Date of filing: 06.01.2015
(51) Int. Cl.: B60K 15/04, B60K 15/03, B60K 15/05

(54) **SYSTEM FOR FILLING AT LEAST ONE TANK, MOTOR VEHICLE COMPRISING SUCH A SYSTEM AND METHOD FOR IMPLEMENTING SUCH A SYSTEM**
SYSTEM ZUM FÜLLEN VON MINDESTENS EINEM TANK, KRAFTFAHRZEUG MIT EINEM DERARTIGEN SYSTEM UND VERFAHREN ZUR IMPLEMENTIERUNG SOLCH EINES SYSTEMS
SYSTÈME PERMETTANT DE REMPLIR AU MOINS UN RÉSERVOIR, UN VÉHICULE À MOTEUR COMPORTANT UN TEL SYSTÈME, ET UN PROCÉDÉ DE MISE EN OEUVRE D'UN TEL SYSTÈME

(30) Priority: 20.01.2014 FR 1450415
(43) Date of publication of application: 30.11.2016
(73) Proprietor: Illinois Tool Works Inc., Glenview, IL 60025 (US)
(72) Inventor: LE-TINNIER, Christophe, F-60290 Cauffry (FR)
(74) Representative: Gevers & Orès
(86) International application number: PCT/US2015/010244
(87) International publication number: WO 2015/108720

(56) References cited:
- DE-A1- 10 303 863
- DE-A1-102007 059 150
- DE-A1-102010 007 849
- FR-A1- 2 800 018
- FR-A1- 2 875 748
- GB-A- 2 396 590

## Description

The present invention relates to a system for filling at least one motor vehicle tank, particularly a tank of urea for selective catalytic reduction. The invention also relates to a motor vehicle comprising such a system and to a method for implementing such a system.

In the conventional way, a filling system comprises a casing, at least one filling head, a cap and a movable flap. The casing is secured to the motor vehicle. The filling head is arranged in the casing and designed to accept the cap. In order to fill the tank, a user opens the flap to uncover the filling head and the cap thereof, then unscrews the cap to free up access to the filling head. The tank can then be filled, for example by inserting a device provided for that purpose into the filling head. Once the tank is full, the user closes off the filling head using its cap, then closes the flap again to cover the filling head and the cap thereof.

When the cap is removed from the filling head, the user can keep it in his or her hand, in his or her pocket or place it on a support. Thus there is a risk of the cap becoming lost. In addition, after filling the tank and before closing the flap again there is a risk that the user may forget to reposition the cap on the filling head.

It is an object of the present invention to propose an improved filling system that seeks to overcome the abovementioned disadvantages.

FR-A-2 875 748 discloses a filling system of a motor vehicle, comprising a casing secured to the motor vehicle, a filling head arranged in the casing and connected to a urea tank. The filling system also includes a removable cap that is suitable for closing off or freeing the filling head of the urea tank. There is no housing for receiving the cap in a configuration preventing closing of the flap.

DE-A-10 2007 059150 also discloses a filling system for a motor vehicle. This filling system includes a casing and a filling head connected to a fuel tank. The filling system also includes a removable cap suitable for closing off or freeing the filling head. The casing delimits a housing for receiving a fixing pin belonging to the cap. The housing is designed so that the cap opposes to the closure of the flap when it is received in the housing.

DE-A-103 03 863 discloses a filling system for filling a tank of a motor vehicle. In this system, the fuel filler flap cannot be closed when the cap is inserted in the recess.

DE-A-10 2010 007 849 discloses a filling system for filling several tanks of a motor vehicle. No urea tank is mentioned.

FR-A-2 800 018 discloses a filling system provided with a flap and a removable cover integrated into the flap.

GB-A-2 396 590 discloses a filling system equipped with an optical signaling element and a switch or a sensor, which switches on the optical signaling element when the flap of the tank is opened. In particular, when the tank lid is open, an optical signaling device starts flashing. The sensor does not include additional security elements that are distributed between the casing and the flap.

To this end, one subject of the invention is a filling system according to claim 1.

Thus the invention makes it possible to improve the safety with which the filling system is implemented. The flap cannot be completely closed again if the user forgets to close off the filling head for filling the urea tank and leaves the cap in its housing. First of all, the user will easily and visually notice that the flap is not closed. Further, the filling system may be equipped with a security device that triggers an alert when the closure of the flap is incomplete.

According to other advantageous features of the invention, considered in isolation or in combination:
- the filling system comprises a filling head for filling a fuel tank; and the filling head for filling the urea tank provided to be closed off by the cap.
- the flap, during closure thereof, covers the two filling heads, for filling the fuel tank and the urea tank, arranged in the casing.
- the filling system comprises a removable cover suitable for covering or freeing the filling head of the fuel tank.
- the cover is integrated into the flap.
- the housing and the body of the cap have complementary circular profiles.
- the casing delimits a compartment, the cap closing off the filling head for filling the urea tank is housed in the compartment, and the cap positioned in the housing protrudes from the compartment.
- the flap includes a part forming a stop against the cap during closure of the flap while the cap is positioned in the housing.

According to one preferred embodiment, the invention relates to a system for filling a fuel tank, and a urea tank for a selective catalytic reduction system with which the vehicle is equipped. In this case, the filling system comprises: a casing; a filling head for filling a fuel tank and a filling head for filling a urea tank, the heads being arranged in the casing and provided with closing-off means; and a movable flap suitable, during closure thereof, for covering the filling heads. The means for closing off the urea-filling head include a removable cap. The casing comprises a housing to accept this cap, in a configuration that prevents the closure of the flap.

Another subject of the invention is a method for implementing a filling system for filling at least one tank of a motor vehicle, the filling system comprising: a casing secured to the motor vehicle; at least one filling head arranged in the casing and connected to a urea tank; a removable cap suitable for closing off or freeing the filling head for filling the urea tank; and a movable flap suitable, during closure thereof, for covering the filling head for filling the urea tank and the cap closing off the filling head for filling the urea tank. When the cap is positioned in a housing formed to that end in the casing, the closing of the flap is prevented, whereas when the cap closes off the filling head, the closing of the flap is authorized such that the flap covers the filling head and the cap closing off the filling head.

The invention will be better understood from reading the description which will follow, given solely by way of nonlimiting example and made with reference to the attached drawings in which:
- figure 1 is a perspective view of a filling system according to the invention, with which a motor vehicle, likewise in accordance with the invention, is equipped, the filling system comprising a casing provided with a housing for accepting a cap used to close off a filling head for the filling of a tank; and
- figure 2 is a view similar to figure 1 showing the cap positioned in the housing.

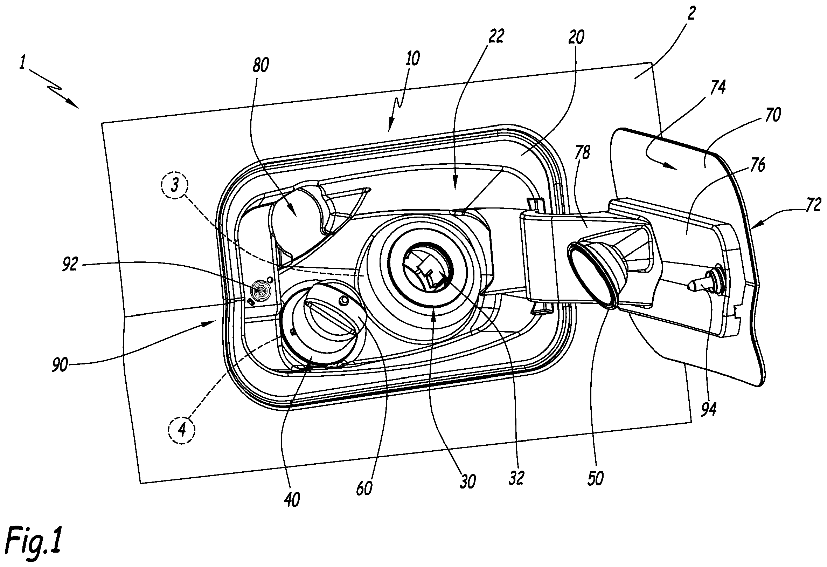

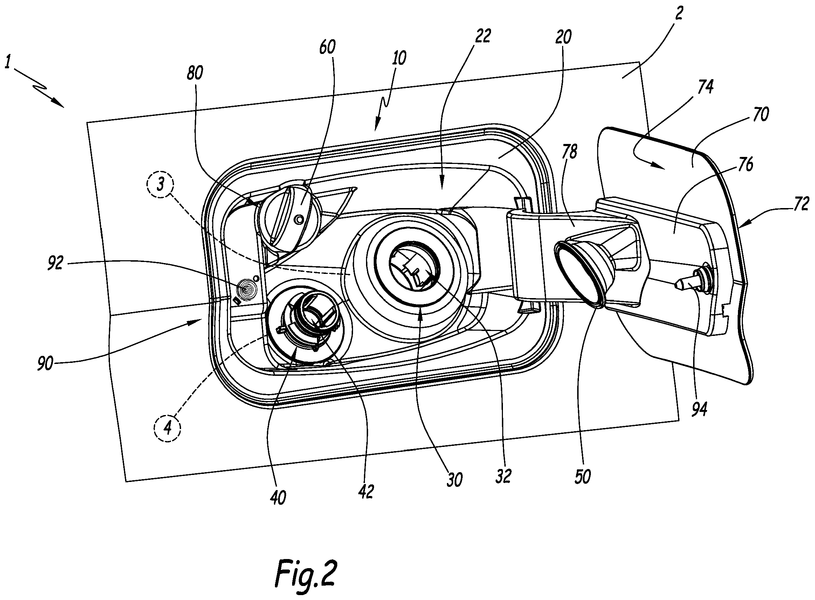

A motor vehicle 1 according to the invention is partially depicted in figures 1 and 2.

The vehicle 1 comprises a body 2 and at least one tank arranged in the body 2. In the example of figures 1 and 2, the vehicle 1 comprises a fuel tank 3 and a urea tank 4 which tanks are arranged in the body 2. For the sake of simplicity, the tanks 3 and 4 have been depicted schematically as circles in dotted line in figures 1 and 2. The fuel tank 3 is designed to receive and store the fuel intended for the engine of the vehicle 1. The urea tank 4 is intended to receive and store the urea intended for the selective catalytic reduction system of the vehicle 1.

The vehicle 1 also comprises a filling system 10 according to the invention, designed for the filling of the tanks 3 and 4.

The filling system 10 comprises a casing 20, a filling head 30 for filling the tank 3 with fuel and a dust cap cover 50 designed to cover the head 30, a head 40 for filling the tank 4 with urea and a cap 60 intended to close off the head 40, a movable flap 70, a housing 80 for accepting the cap 60 and a security device 90.

The casing 20 is fixed to the body 2 of the vehicle 1. The casing 20 has a hollow overall shape and delimits a compartment 22 set back from the body 2 of the vehicle 1.

The heads 30 and 40 are arranged in the compartment 22 of the casing 20. The heads 30 and 40 may be molded then assembled with the casing 20. The head 30 is connected to the fuel tank 3, while the head 40 is connected to the urea tank 4, as indicated schematically in dotted line in figures 1 and 2. The head 30 comprises an orifice 32 for the passage of a tank 3 filling device. Likewise, the head 40 comprises an orifice 42 for the passage of a tank 4 filling device.

The dust cap cover 50 forms a means of covering the head 30. The cover 50 is removable so as selectively to cover or uncover the head 30. Means of closing off the orifice 32, which are not visible in figures 1 and 2, are integrated into the head 30. For preference, these closing-off means open automatically as the filling device for filling the tank 3 is introduced into the orifice 32 and close automatically when this device is withdrawn from the orifice 32, under the action of this device. The dust cap cover 50 and the closing-off means complement one another. The head 30 is said to be "capless". Advantageously, the dust cap cover 50 may be integrated into the flap 70. Thus, the closing of the flap 70 allows the head 30 to be covered with the cover 50.

The cap 60 forms a means of closing off the head 40. The cap 60 is removable in order selectively to close off or unstopper the head 40. The cap 60 may be screwed onto the head 40. For that purpose, the head 40 and the cap 60 comprise a screw thread and a tapped thread that complement one another. The cap 60 may also be referred to as a stopper or cover.

The flap 70 is articulated to the casing 20. The flap 70 is able to move between an open position shown in figures 1 and 2, and a closed position. When the flap 70 is open, a user can access the compartment 22, the heads 30 and 40, the cap 60 and the housing 80. The opening of the flap 70 moves the cover 50 away from the head 30, making it possible to uncover the orifice 32. When the flap 70 is closed, this flap 70 covers the compartment 22, the heads 30 and 40, the cap 60 and the housing 80. The closing of the flap 70 brings the dust cap cover 50 over the head 30, making it possible to cover the orifice 32.

The flap 70 comprises an external surface 72 which will lie flush with the external surface of the body 2 of the vehicle 1 when the flap 70 is closed. The flap 70 comprises an internal surface 74 which is the opposite surface to the external surface 72. On the surface 74, the flap 70 comprises a block 76 forming a stop against the cap 60 positioned in the housing 80, but not against the cap 60 positioned on the head 40. The block 76 is formed as a projection relative to the surface 74. The flap 70 comprises an arm 78 articulated to the casing 20. The arm 78 is integral with the block 76 and with the cover 50.

The housing 80 is formed in the casing 20 with dimensions specifically suited to accepting the cap 60. In the example in the figures, the housing 80 has a circular profile, so as to accept the body of the cap 60 which likewise has a circular profile. In other words, the housing 80 and the body of the cap 60 have complementary circular profiles. For preference, the housing 80 is as close as possible to the head 40, to make it easier for the user to move the cap 60 from the head 40 to the housing 80. The cap 60 is positioned on the head 40 in figure 1 and in the housing 80 in figure 2. In the configuration of figure 2, the closure of the flap 70 is prevented by the presence of the cap 60 in the housing 80.

The security device 90 is triggered during closure of the flap 70. When the cap 60 is positioned in the housing 80, the flap 70 cannot be closed and the device 90 cannot be triggered. In the example of figures 1 and 2, the device 90 comprises an orifice 92 provided in the casing 20 and a pin 94 provided on the block 76 of the flap 70. When the flap 70 is closed, the pin 94 enters the orifice 92. In other words, the device 90 comprises complementary security elements 92 and 94 which are split between the casing 20 and the flap 70 and which, during closure of the flap 70, cooperate when the housing 80 does not contain the cap 60 and are prevented from cooperating when the housing 80 contains the cap 60. Advantageously, the device 90 generates an alert intended for the user of the vehicle 1 when the closure of the flap 70 is incomplete. For example, this alert may be a visual signal such as the lighting-up of an indicator lamp on the dashboard of the vehicle 1.

The invention also relates to a method for implementing the filling system 10. When the cap 60 is closing off the head 40, as in figure 1, the closure of the cap 70 is permitted, so that the flap 70 can cover the head 40 and the cap 60 covering the head 40. When the cap 60 is positioned in the housing 80 formed for this purpose in the casing 20, as in figure 2, closure of the flap 70 is prevented. In addition, when the cap 60 is positioned in the housing 80, the risk of loss is greatly reduced.

Moreover, the filling system 10 may be configured differently from figures 1 and 2 without departing from the scope of the invention.

As an alternative form that has not been depicted, the filling system 10 may be designed for filling a single tank, designed to accept at least one fluid. In that case, the configuration of the system 10 is adapted to suit the target application.

According to another alternative form that has not been depicted, the filling system 10 may be designed for filling more than two distinct tanks. In that case, the system 10 is equipped with filling heads the number, shape and arrangement of which are adapted to suit the target application.

According to another alternative form that has not been depicted, the head 30 may be closed off by a removable cap, which has an operation similar to the cap 60 closing off the head 40. In that case, the system 10 does not comprise closing-off means integrated into the head 50, neither does it comprise a dust cap cover 50 integrated into the flap 70.

According to an alternative form that has not been depicted, the internal surface 74 of the flap 70 comes into abutment against the cap 60 arranged in the housing 80 but not against the cap 60 arranged on the head 40.

According to an alternative form that has not been depicted, the device 90 can be configured differently from figures 1 and 2. For example, the orifice may be provided on the flap 70 and the pin may be provided on the casing 20.

Furthermore, the technical features of the various embodiments and alternative forms mentioned in the description hereinabove may be, in their entirety or in the case of some of them, combined with one another. Thus, the filling system 10 may be adapted in terms of cost, ergonomics and performance.

## Claims

1. A filling system (10) for filling at least one tank (3; 4) of a motor vehicle (1), the filling system (10) comprising:
- a casing (20) secured to the motor vehicle (1);
- at least one filling head (40) arranged in the casing (20) and connected to a urea tank (4);
- a removable cap (60) suitable for closing off or freeing the filling head (40) for filling the urea tank (4); and
- a movable flap (70) suitable, during closure thereof, for covering the filling head (40) for filling the urea tank (4) and the cap (60) closing off the filling head (40) for filling the urea tank (4);
**characterized in that**:
- the casing (20) includes a housing (80) for receiving the cap (60) in a configuration preventing closing of the flap (70),
- the filling system (10) comprises a security device (90) that is activated during closure of the flap (70), and
- the security device (90) comprises additional security elements (92; 94) that are distributed between the casing (20) and the flap (70) and which, during closure of the flap (70), cooperate when the housing (80) does not include the cap (60) and are prevented from cooperating when the housing (80) includes the cap (60).

2. The filling system (10) according to claim 1, wherein the filling system (10) comprises:
- a filling head (30) for filling a fuel tank (3); and
- the filling head (40) for filling the urea tank (4) provided to be closed off by the cap (60);
and wherein the flap (70), during closure thereof, covers the two filling heads (30; 40), for filling the fuel tank (3) and the urea tank (4), arranged in the casing (20).

3. The filling system (10) according to claim 2, wherein the filling system (10) comprises a removable cover (50) suitable for covering or freeing the filling head (30) of the fuel tank (3).

4. The filling system (10) according to claim 3, wherein the cover (50) is integrated into the flap (70).

5. The filling system (10) according to one of the preceding claims 1 to 4, wherein the housing (80) and the body of the cap (60) have complementary circular profiles.

6. The filling system (10) according to one of the preceding claims 1 to 5, wherein the casing (20) delimits a compartment (22), wherein the cap (60) closing off the filling head (40) for filling the urea tank (4) is housed in the compartment (22), and wherein the cap (60) positioned in the housing (80) protrudes from the compartment (22).

7. The filling system (10) according to one of the preceding claims 1 to 6, wherein the flap (70) includes a part (76) forming a stop against the cap (60) during closure of the flap (70) while the cap (60) is positioned in the housing (80).

8. A motor vehicle (1), comprising a filling system (10) according to one of the preceding claims 1 to 7.

9. A method for implementing a filling system (10) according to one of the claims 1 to 7, **characterized in that** when the cap (60) is positioned in a housing (80) formed to that end in the casing (20), the closing of the flap (70) is prevented, whereas when the cap (60) closes off the filling head (40), the closing of the flap (70) is authorized such that the flap (70) covers the filling head (40) and the cap (60) closing off the filling head (40).

## Patentansprüche

1. Füllsystem (10) zum Befüllen mindestens eines Tanks (3; 4) eines Kraftfahrzeugs (1), das Füllsystem (10) umfassend:
- ein Gehäuse (20), das an das Kraftfahrzeug (1) befestigt ist;
- mindestens einen Füllkopf (40), der im Gehäuse (20) angeordnet ist und mit einem Harnstofftank (4) verbunden ist;
- einen entfernbaren Deckel (60), der zum Verschließen oder Freilegen des Füllkopfs (40) zum Befüllen des Harnstofftanks (4) geeignet ist; und
- eine bewegliche Klappe (70), die, während sie geschlossen ist, zum Abdecken des Füllkopfs (40) zum Befüllen des Harnstofftanks (4) und der Klappe (60), die den Füllkopf (40) zum Befüllen des Harnstofftanks (4) verschließt, geeignet ist;
**dadurch gekennzeichnet, dass**:
- das Gehäuse (20) eine Einhausung (80) zum Aufnehmen des Deckels (60) in einer Ausgestaltung, die das Schließen der Klappe (70) verhindert, beinhaltet,
- das Füllsystem (10) eine Sicherheitsvorrichtung (90) umfasst, die während der Schließung der Klappe (70) aktiviert ist, und
- die Sicherheitsvorrichtung (90) zusätzliche Sicherheitselemente (92; 94) umfasst, die zwischen dem Gehäuse (20) und der Klappe (70) verteilt sind und welche, während der Schließung der Klappe (70), zusammenarbeiten, wenn die Einhausung (80) nicht den Deckel (60) beinhaltet, und am Zusammenarbeiten gehindert werden, wenn die Einhausung (80) den Deckel (60) beinhaltet.

2. Füllsystem (10) nach Anspruch 1, wobei das Füllsystem (10) umfasst:
- einen Füllkopf (30) zum Befüllen eines Kraftstofftanks (3); und
- den Füllkopf (40) zum Befüllen des Harnstofftanks (4), der vorgesehen ist, von dem Deckel (60) verschlossen zu werden;
und wobei die Klappe (70), während ihrer Schließung, die zwei Füllköpfe (30; 40) zum Befüllen des Kraftstofftanks (3) und des Harnstofftanks (4), angeordnet im Gehäuse (20), abdeckt.

3. Füllsystem (10) nach Anspruch 2, wobei das Füllsystem (10) eine entfernbare Abdeckung (50) umfasst, die zum Abdecken oder Freilegen des Füllkopfs (30) des Kraftstofftanks (3) geeignet ist.

4. Füllsystem (10) nach Anspruch 3, wobei die Abdeckung (50) in die Klappe (70) integriert ist.

5. Füllsystem (10) nach einem der vorhergehenden Ansprüche 1 bis 4, wobei die Einhausung (80) und der Körper des Deckels (60) sich ergänzende kreisförmige Profile haben.

6. Füllsystem (10) nach einem der vorhergehenden Ansprüche 1 bis 5, wobei das Gehäuse (20) eine Kammer (22) begrenzt, wobei der Deckel (60), der den Füllkopf (40) zum Befüllen des Harnstofftanks (4) verschließt, in der Kammer (22) untergebracht ist und wobei der Deckel (60), der in der Einhausung (80) positioniert ist, von der Kammer (22) vorragt.

7. Füllsystem (10) nach einem der vorhergehenden Ansprüche 1 bis 6, wobei die Klappe (70) ein Bauteil (76) aufweist, das einen Anschlag gegen den Deckel (60) während der Schließung der Klappe (70) ausbildet, während der Deckel (60) in der Einhausung (80) positioniert ist.

8. Kraftfahrzeug (1), umfassend ein Füllsystem (10) nach einem der vorhergehenden Ansprüche 1 bis 7.

9. Verfahren zum Umsetzen eines Füllsystems (10) nach einem der Ansprüche 1 bis 7, **dadurch gekennzeichnet, dass** der Deckel (60) in einer Einhausung (80) positioniert ist, die zu diesem Zweck in dem Gehäuse (20) ausgebildet ist, die Schließung der Klappe (70) verhindert wird, wohingegen, wenn der Deckel (60) den Füllkopf (40) verschließt, die Schließung der Klappe (70) derart befugt ist, dass die Klappe (70) den Füllkopf (40) und den Deckel (60), der den Füllkopf (40) verschließt, abdeckt.

## Revendications

1. Système de remplissage (10) pour le remplissage d'au moins un réservoir (3 ; 4) de véhicule automobile (1), le système de remplissage (10) comprenant :
- un carter (20) solidaire du véhicule automobile (1) ;
- au moins une tête de remplissage (40) agencée dans le carter (20) et reliée à un réservoir d'urée (4) ;
- un capuchon (60) amovible adapté pour obturer ou dégager la tête de remplissage (40) pour le remplissage du réservoir d'urée (4) ; et
- un volet (70) mobile adapté, lors de sa fermeture, pour recouvrir la tête de remplissage (40) pour le remplissage du réservoir d'urée (4) et le capuchon (60) obturant la tête de remplissage (40) pour le remplissage du réservoir d'urée (4) ;
**caractérisé en ce que** :
le carter (20) comporte un logement (80) pour la réception du capuchon (60) dans une configuration empêchant la fermeture du volet (70),
le système de remplissage (10) comporte un dispositif de sécurité (90) qui est activé lors de la fermeture du volet (70), et
le dispositif de sécurité (90) comporte des éléments de sécurité supplémentaires (92 ; 94) qui sont répartis entre le carter (20) et le volet (70) et qui, lors de la fermeture du volet (70), coopèrent lorsque le logement (80) ne comporte pas le capuchon (60) et sont dans l'impossibilité de coopérer lorsque le logement (80) comporte le capuchon (60).

2. Système de remplissage (10) selon la revendication 1, dans lequel le système de remplissage (10) comprend :
- une tête de remplissage (30) pour le remplissage d'un réservoir de carburant (3) ; et
- la tête de remplissage (40) pour le remplissage du réservoir d'urée (4), prévue pour être obturée par le capuchon (60) ;
et dans lequel le volet (70), lors de sa fermeture, recouvre les deux têtes de remplissage (30 ; 40) pour le remplissage du réservoir de carburant (3) et du réservoir d'urée (4), agencées dans le carter (20).

3. Système de remplissage (10) selon la revendication 2, dans lequel le système de remplissage (10) comprend un couvercle (50) amovible adapté pour couvrir ou dégager la tête de remplissage (30) du réservoir de carburant (3) .

4. Système de remplissage (10) selon la revendication 3, dans lequel le couvercle (50) es intégré au volet (70).

5. Système de remplissage (10) selon l'une des revendications précédentes 1 à 4, dans lequel le logement (80) et le corps du capuchon (60) présentent des profils circulaires complémentaires.

6. Système de remplissage (10) selon l'une des revendications précédentes 1 à 5, dans lequel le carter (20) délimite un compartiment (22), dans lequel le capuchon (60) obturant la tête de remplissage (40) du réservoir d'urée (4) est logé dans le compartiment (22) et en ce que le capuchon (60) positionné dans le logement (80) dépasse du compartiment (22).

7. Système de remplissage (10) selon l'une des revendications précédentes 1 à 6, dans lequel le volet (70) comporte une partie (76) formant butée contre le capuchon (60) lors de la fermeture du volet (70) alors que le capuchon (60) est positionné dans le logement (80) .

8. Véhicule automobile (1), comprendant un système de remplissage (10) selon l'une des revendications précédentes 1.

9. Méthode de mise en oeuvre d'un système de remplissage (10) **caractérisée en ce que** lorsque le capuchon (60) est positionné dans un logement (80) ménagé à cet effet dans le carter (20), la fermeture du volet (70) est empêchée, tandis que lorsque le capuchon (60) obture la tête de remplissage (40), la fermeture du volet (70) est autorisée de sorte que le volet (70) recouvre la tête de remplissage (40) et le capuchon (60) obturant la tête de remplissage (40).
